(19) **Europäisches Patentamt**

**European Patent Office**

**Office européen des brevets**

(11) **EP 1 403 549 B1**

(12) **EUROPÄISCHE PATENTSCHRIFT**

(45) Veröffentlichungstag und Bekanntmachung des Hinweises auf die Patenterteilung:
**15.11.2006 Patentblatt 2006/46**

(51) Int Cl.:
***F16F 9/02*** *(2006.01)*

(21) Anmeldenummer: **03020663.5**

(22) Anmeldetag: **11.09.2003**

(54) **Längenverstellbare Druckfeder**

Length-adjustable compression spring

Ressort à compression réglable en longueur

(84) Benannte Vertragsstaaten:
**AT BE BG CH CY CZ DE DK EE ES FI FR GB GR HU IE IT LI LU MC NL PT RO SE SI SK TR**

(30) Priorität: **24.09.2002 DE 10244671**

(43) Veröffentlichungstag der Anmeldung:
**31.03.2004 Patentblatt 2004/14**

(73) Patentinhaber: **SUSPA Holding GmbH
90518 Altdorf (DE)**

(72) Erfinder:
• **Riel, Hans-Werner
92318 Neumarkt (DE)**
• **Knapp, Rainer
92364 Deining (DE)**

• **Wunderling, Gerhard
91257 Pegnitz (DE)**
• **Richter, Stefan
95491 Ahorntal (DE)**

(74) Vertreter: **Rau, Manfred et al
Rau, Schneck & Hübner
Patentanwälte
Königstrasse 2
90402 Nürnberg (DE)**

(56) Entgegenhaltungen:
**EP-A- 0 421 470          DE-A- 10 006 061
FR-A- 1 112 300          NL-A- 7 201 101
US-A- 3 656 593          US-A- 3 981 380**

**Beschreibung**

Die Erfindung betrifft eine längenverstellbare Druckfeder nach dem Oberbegriff des Anspruchs 1.

Derartige blockierbare Druckfedern sind als Gasfedern in großer Zahl bekannt. Beispielsweise sind sogenannte Zwei-Rohr-Gasfedern bekannt, bei denen zwei Rohre konzentrisch ineinander angeordnet sind und zwischen sich einen Ringkanal begrenzen. Beiderseits des Kolbens sind Teil-Gehäuseräume ausgebildet, die über den Ringkanal und ein an einem Ende des Gehäuses angeordnetes Ventil miteinander verbindbar sind. Derartige längenverstellbare Gasfedern sind beispielsweise aus der DE-PS 18 12 282 (entsprechend US-PS 3,656,593) bekannt.

Weiterhin sind längenverstellbare Gasfedern bekannt, bei denen das Ventil im Kolben angeordnet ist und die durch eine in der hohl ausgebildeten Kolbenstange angeordnete Ventil-Betätigungs-Stange betätigbar sind. Derartige Gasfedern sind beispielsweise aus der EP 0 353 550 B1 (entsprechend US-PS 4,949,941) bekannt. Bei den letztgenannten Gasfedern können die Teil-Gehäuseräume auch mit Hydrauliköl gefüllt sein; die Druckgasfüllung befindet sich dann nur in einer dem geschlossenen Ende des Gehäuses zugeordneten Druckgas-Kammer, die von dem benachbarten Teil-Gehäuseraum durch einen abgedichtet an der Innenwand des Gehäuses geführten Schiebekolben abgetrennt ist.

Aus der EP 1 101 972 A2 ist eine Gas-Zugfeder bekannt, die ein Gehäuse mit einer konzentrisch in diesem geführten Kolbenstange aufweist. Auf der Kolbenstange ist ein im Gehäuse abgedichtet geführter Kolben angebracht, der eine Ölkammer in zwei Teil-Ölkammern untertrennt. Es ist weiterhin ein Ventil zum Miteinander-Verbinden der Teil-Ölkammern vorhanden, das einen Ventilstift aufweist, der von außerhalb des Gehäuses betätigbar ist und beim Einschieben in einer Ventil-Öffnungs-Richtung in Richtung einer Mittel-Längs-Achse in eine Öffnungsstellung des Ventils und durch eine Rückstellfeder entgegen der Ventil-Öffnungs-Richtung in eine Schließstellung verbracht wird. In dieser Schließstellung blockiert die Gas-Zugfeder. Im Anschluss an die Ölkammer ist eine Zug-Gasfeder in das Gehäuse integriert, in die die Kolbenstange geführt ist. In dem die Teil-Ölkammern voneinander trennenden Kolben ist zusätzlich ein nach Art eines Rückschlagventils ausgebildetes Überdruckventil vorhanden, das einen den Kolben durchsetzenden, die Teil-Ölkammern miteinander verbindenden Kanal aufweist, der auf einer Seite mittels einer federbelasteten Dichtungsscheibe verschlossen ist. Bei einer sehr großen, oberhalb einer zulässigen Kraft liegenden Überlastkraft zwischen Kolbenstange und Gehäuse öffnet dieses Überlastventil und hebt die Blockierung der Feder auf. Zweck dieser Maßnahme ist es, eine Beschädigung der Gasfeder oder der mit dieser verbundenen Teile bei einer Überlast zu vermeiden. Ansonsten kann die Kolbenstange relativ zum Gehäuse bei blockierter Gasfeder nicht bewegt werden.

Die bekannten blockierbaren Federn haben hinsichtlich ihrer Anwendungsflexibilität noch Verbesserungspotential. Insbesondere existieren Anwendungen, bei denen eine Beweglichkeit der Kolbenstange relativ zum Gehäuse auch bei blockierter Druckfeder gefordert ist.

*Aus der EP 0 421470 A ist eine gattungsgemäße Druckfeder bekannt. Diese Druckfeder weist zum Zerstörungsschutz ein Überlastventil auf.*

*Aus der US 3,981,380A ist ein Hydraulikdämpfer mit Einfeder- bzw. Ausfeder-Durchtrittskanälen zwischen zwei Teil-Gehäuseräumen bekannt. Die Durchtrittskanäle sind durch Ventilteller abgedeckt. Die Ventilteller haben eine metallische Trägerlage mit einer nicht-metallischen Beschichtung aus Kunststoff oder Gummi.*

*Die FR 1 112 300 A zeigt einen Hydraulikdämpfer mit einer Schraubenfeder als Kraftspeicher.*

*Ein weiterer Hydraulikdämpfer ist aus der NL 7 201 101 A bekannt.*

Der Erfindung liegt die Aufgabe zugrunde, eine Druckfeder der eingangs genannten Art derart weiterzubilden, dass sie flexibler eingesetzt werden kann, wobei eine Beweglichkeit der Kolbenstange relativ zum Gehäuse auch bei blockierter Druckfeder gegeben sein soll.

Diese Aufgabe ist erfindungsgemäß gelöst durch die im Kennzeichnungsteil des Anspruchs 1 angegebenen Merkmale.

All den bekannten blockierbaren Federn ist gemein, dass deren Blockierung, wenn überhaupt, nur durch eine sehr hohe Überlastkraft aufgehoben werden kann, welche weit oberhalb derjenigen Kraft liegt, die durch den Kraftspeicher auf die Kolbenstange in einer Kolbenstangen-Ausschubrichtung von dieser erzeugt wird. Diese Kraft, die nachfolgend auch als Ausschub-Kraft bezeichnet ist, ist als diejenige Kraft definiert, mit welcher die Kolbenstange ausgeschoben wird, wenn sie innerhalb des Gehäuses in einer Position 5mm vor dem Endanschlag in Ausschubrichtung vorliegt und wenn das betätigbare Ventil geöffnet ist, sodass die beiden Teil-Gehäuseräume miteinander verbunden sind.

Erfindungsgemäß wurde erkannt, dass es mit dem zusätzlichen automatischen Ventil möglich wird, die Blockierung der Druckfeder auch bei geschlossenem betätigbaren Ventil durch Aufbringung einer Überwindungs-Kraft zu überwinden, die mit der vom Kraftspeicher auf die Kolbenstange in Kolbenstangen-Ausschubrichtung ausgeübten Ausschubkraft vergleichbar ist. Dies erweitert die Anwendungsmöglichkeiten der Druckfeder beträchtlich. Wenn die Überwindungs-Kraft ungefähr die gleiche Größe hat wie die Ausschubkraft, und maximal das Doppelte des Betrages dieser Ausschubkraft beträgt, lässt sich die Blockade der Druckfeder entsprechend dem jeweiligen Einsatzgebiet von dieser mit angepasster Überwindungs-Kraft überwinden, sodass in diesen Fällen die Blockade der Druckfeder nicht durch Betätigung des betätigbaren Ventils aufgehoben werden muss. Dies erhöht die Bequemlichkeit der Bedienung der Druckfeder.

Die Größe der Überwindungs-Kraft kann durch Vorgabe der Vorspannung des automatischen Ventils eingestellt werden. Hierbei ist neben der Ausschubkraft meist noch eine zusätzliche Belastungs-Kraft auf die Kolbenstange zu berücksichtigen, die entgegengesetzt zur Kolbenstangen-Ausschubrichtung wirkt. Je nach Größe dieser Belastungs-Kraft sind die in den Ansprüchen 2 und 3 angegebenen Bereichsgrenzen für die Überwindungs-Kraft vorteilhaft.

Entsprechende Druckfedern eignen sich z. B. zum Einsatz bei verstellbaren Rückenlehnen z. B. eines Fahrzeugsitzes, wobei die Druckfeder so ausgelegt sein kann, dass bei entlasteter Sitzlehne diese auch im blokkierten Zustand von selbst wieder in eine aufgerichtete Ausgangsposition zurückkehrt. Die Überwindungs-Kraft entspricht hier der resultierenden Kraft aus der Ausschubkraft in Kolbenstangen-Ausschubrichtung und einer ggf. auch im entlasteten Zustand noch in Gegenrichtung wirkenden Belastungs-Kraft, z. B. durch das Gewicht der Sitzlehne, welches auch bei entlasteter Sitzlehne noch auf die Kolbenstange wirkt. Eine weitere Anwendungsmöglichkeit der im blockierten Zustand ausschiebbaren Druckfeder ist beispielsweise die Höhenverstellung einer Tischplatte. Dort ist die Vorspannung des automatischen Ventils so gewählt, dass eine kleine zusätzliche Überwindungs-Kraft ausreicht, um die durch das Gewicht der Tischplatte entgegen der Kolbenstangen-Ausschubrichtung vorgespannte Druckfeder auch im blockierten Zustand auszuschieben.

Bei der Sitzlehnenverstellung kann die Überwindungs-Kraft so eingestellt sein, dass es auch im blokkierten Zustand der Druckfeder bei entlasteter Sitzlehne möglich ist, die Sitzlehne durch zusätzlichen Druck in Kolbenstangen-Ausschubrichtung auch dann in die aufgerichtete Position zu bringen, wenn die Druckfeder aufgrund des betätigbaren Ventils in Schließstellung blokkiert ist.

Ein Ventilelement gemäß den Ansprüchen 4 bis 6 weist gute Dichteigenschaften auf, ist kostengünstig herstellbar und in die Druckfeder einbaubar.

Eine Vorspannung des Ventilelements gemäß Anspruch 7 ist einfach realisierbar.

Kraftspeicher gemäß Anspruch 8 und 9 sowie ein Druck-Medium nach Anspruch 10 haben sich - je nach Einsatzgebiet - bewährt.

Bei einer Automatik-Überströmverbindung nach Anspruch 11 mit einem Überströmkanal mit eingesetztem Zylinderstift lässt sich über die Durchmesserverhältnisse des Überströmkanals einerseits und des Zylinderstifts andererseits sowie über die Länge des Zylinderstifts eine Feinabstimmung der Dämpfung der längenverstellbaren Druckfeder erzielen.

Weitere Merkmale, Vorteile und Einzelheiten der Erfindung ergeben sich aus der nachfolgenden Beschreibung mehrerer Ausführungsbeispiele anhand der Zeichnung. Es zeigt:

Fig. 1     eine erste Ausführungsform einer Druckfeder im Längsschnitt,

Fig. 2     Ventile der Druckfeder in geschlossenem Zustand im Längsschnitt in einer gegenüber Fig. 1 stark vergrößerten Darstellung,

Fig. 3     die Druckfeder in einer zu Fig. 1 ähnlichen Darstellung mit einem geschlossenen Blockier-Ventil und einem geöffneten Automatik-Ventil,

Fig. 4     eine zweite Ausführungsform einer Druckfeder im Längsschnitt,

Fig. 5     eine dritte Ausführungsform einer Druckfeder im Längsschnitt,

Fig. 6     eine vierte Ausführungsform einer Druckfeder im Längsschnitt, und

Fig. 7     eine weitere Variante der Druckfeder in einer zu Fig. 2 ähnlichen Darstellung.

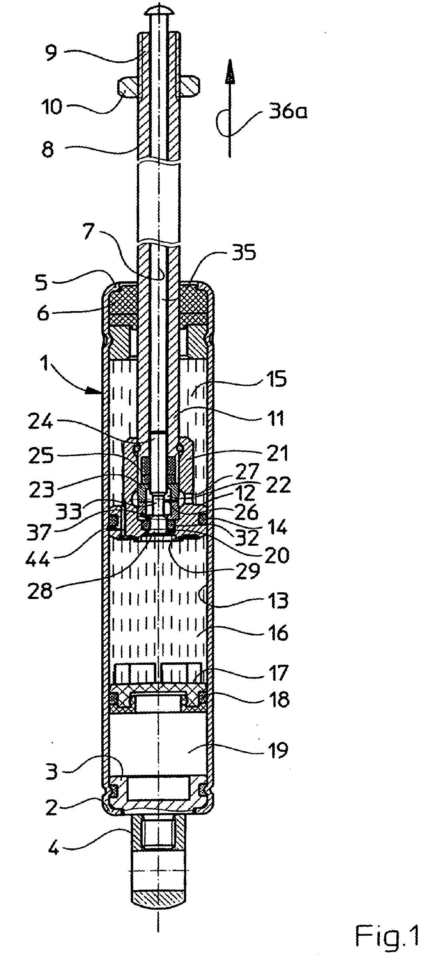

Die in den Fig. 1 bis 3 dargestellte erste Ausführungsform einer längenverstellbaren, blockierbaren Gasfeder weist ein im wesentlichen zylindrisches, aus einem Rohr hergestelltes Gehäuse 1 auf, das an einem Ende 2 mittels eines Bodens 3 gasdicht verschlossen ist, an dem ein Befestigungselement 4 angebracht ist. Am anderen Ende 5 des Gehäuses 1 ist eine ringförmig ausgebildete Führungs- und Dichtungs-Einheit 6 flüssigkeitsdicht befestigt, die zur Führung und Abdichtung einer im Gehäuse 1 konzentrisch zu dessen Mittel-Längs-Achse 7 verschiebbar angeordneten Kolbenstange 8 dient. Am außerhalb des Gehäuses 1 befindlichen freien Ende 9 der Kobenstange 8 ist ebenfalls ein Befestigungselement 10 vorgesehen.

Am im Gehäuse 1 befindlichen Ende 11 der Kolbenstange 8 ist ein Kolben 12 angebracht, der an der Innenwand 13 des Gehäuses 1 geführt ist und gegenüber dieser mittels einer Dichtung 14 flüssigkeitsdicht abgedichtet ist. Der Kolben 12 teilt den Innenraum des Gehäuses in ein zwischen Kolben 12 und Führungs- und Dichtungs-Einheit 6 befindlichen ersten Teil-Gehäuseraum 15 und einen hiervon abgewandten zweiten Teil-Gehäuseraum 16. Der Teil-Gehäuseraum 16 wiederum wird durch einen Schiebekolben 17 begrenzt, der an der Innenwand 13 des Gehäuses 1 geführt verschiebbar und gegenüber dieser mittels einer Dichtung 18 gas- und flüssigkeitsdicht abgedichtet ist. Zwischen dem Schiebekolben 17 und dem Boden 3 wiederum ist eine als Kraftspeicher dienende Druckgas-Kammer 19 angeordnet, in der sich Gas unter Druck befindet. Die Teil-Gehäuseräume 15, 16 sind mit einer Flüssigkeit, beispielsweise Hydrauliköl, gefüllt.

Im Kolben 12 ist ein Blockier-Ventil 20 ausgebildet, mittels dessen die Teil-Gehäuseräume 15, 16 miteinander verbunden beziehungsweise voneinander getrennt werden können. Es weist einen Ventilkörper 21 auf, der sich auf der der Dichtungs- und Führungs-Einheit 6 zugewandten Seite des Kolbens 12 befindet. Im hohl ausgebildeten Ventilkörper 21 ist eine zweiteilig ausgebildete, einen Überströmraum 22 begrenzende Büchse 23 angeordnet, die von einem koaxial zur Achse 7 angeordneten und verschiebbaren Ventilstift 24 durchsetzt wird. Der Ventilstift 24 ist zwischen der Büchse 23 und der hohl ausgebildeten Kolbenstange 8 mittels einer Dichtung 25 nach außen abgedichtet. Der Überströmraum 22 ist mittels einer in der Büchse 23 ausgebildeten Drosselöffnung 26 und einem im Ventilkörper 21 ausgebildeten Überströmkanal 27 mit dem Teil-Gehäuseraum 15 ständig verbunden.

Der Ventilstift 24 weist an seinem zum Teil-Gehäuseraum 16 weisenden Ende einen sich zweistufig konusförmig erweiternden Ventilteller 28 auf, der in der Verbindungsöffnung 29 des Ventils 20 zum Teil-Gehäuseraum 16 angeordnet ist.

Eine zweite Konuswand 30 des Ventiltellers 28 mit größerem Durchmesser dient als Bewegungsbegrenzung des Ventilstiftes 24 in Ausschubrichtung von diesem. Diese zweite Konuswand 30 arbeitet hierzu mit einer Gegenfläche 31 des Ventilkörpers 21 zusammen. Zwischen den beiden Konusflächen weist der Ventilstift 24 eine zylindrische Wand 31 a auf. Diese Wand 31a dichtet gegen den Ventilkörper 21 über eine Dichtung 32 ab. Diese liegt in einer Umfangsnut, die aus dem Ventilkörper 21 und der Büchse 23 gebildet ist.

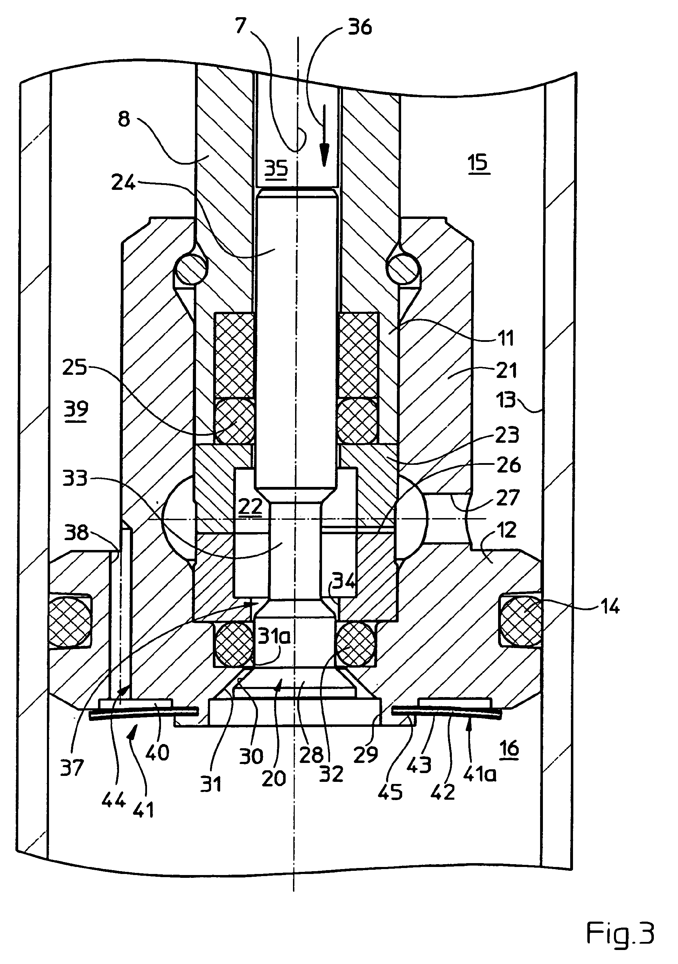

Der Ventilstift 24 weist im Bereich zwischen dem Überströmraum 22 und dem Ventilteller 28 einen verjüngten Abschnitt 33 auf, zwischen dem und den benachbarten Teilen, nämlich der Büchse 23, der Dichtung 32 und der Gegenfläche 31 ein bis zum Ventilteller 28 führender, ringförmiger Kanal 34 ausgebildet ist. In der hohl ausgebildeten Kolbenstange 8 ist eine in Richtung der Achse 7 verschiebbare, vom Ende 11 her durch Verschieben betätigbare Ventil-Betätigungs-Stange 35 angeordnet, die gegen den Ventilstift 24 anliegt. Wenn diese Stange 35 gemäß Fig. 3 in Ventil-Öffnungs-Richtung 36 in die Kolbenstange 8 eingeschoben wird, dann wird der Ventilstift 24 aus der Schließstellung in Richtung zum Teil-Gehäuseraum 16 in eine Ventil-Öffnungs-Stellung verschoben. Hierdurch hebt sich die dichtende zylindrische Wand 31a des Ventiltellers 28 von der Dichtung 32 ab, wobei der verjüngte Abschnitt 33 mit der Dichtung 32 in Überdeckung kommt. Der Teil-Gehäuseraum 15 ist hierdurch über eine Betätigungs-Überströmverbindung 37, gebildet aus dem Überströmkanal 27, die Drosselöffnung 26, den Überströmraum 22, den Kanal 34 und die Verbindungsöffnung 29 mit dem Teil-Gehäuseraum 16 verbunden und beim Einschieben der Kolbenstange 8 in das Gehäuse 1 kann Hydrauliköl vom Teil-Gehäuseraum 16 zum Teil-Gehäuseraum 15 fließen. Dieses Einschieben erfolgt gegen die vom Druckgas in der Druckgas-Kammer 19 erzeugten Gegenkraft, wobei bei dieser Bewegung der Schiebekolben 17 unter weiterem Zusammendrücken des Druckgases in Richtung zum Boden 3 hin verschoben wird. Wenn dagegen bei geöffnetem Ventil die Kolbenstange 8 entlastet ist, wird sie aufgrund der vom Druckgas ausgeübten Kraft aus dem Gehäuse 1 ausgeschoben; der Schiebekolben 17 wird vom Boden 3 wegbewegt. Die Gasfeder ist also eine Druck-Gasfeder. Wenn die Betätigungs-Stange 35 losgelassen wird, dann wird der Ventilstift 24 wieder aufgrund des im Teil-Gehäuseraum 16 wirkenden Drucks in seine Schließstellung gedrückt. Der Kolben 12 mit der Kolbenstange 8 ist dann relativ zum Gehäuse 1 mit diesem hydraulisch verriegelt bzw. blockiert.

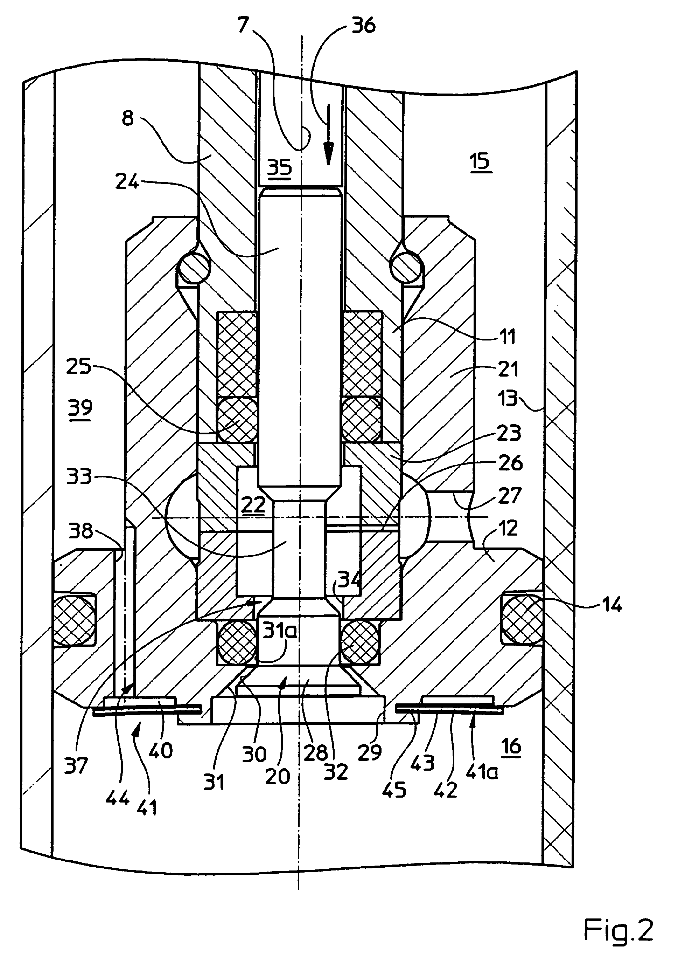

Zusätzlich sind die beiden Teil-Gehäuseräume 15, 16 über einen Überströmkanal 38 miteinander verbunden. Dieser mündet in den ersten Teil-Gehäuseraum 15 über einen den Ventilkörper 21 außen umgebenden, ringförmigen Teil-Gehäuseraumabschnitt 39 aus. In den zweiten Teil-Gehäuseraum 16 mündet der Überströmkanal 38 über eine Umfangsnut 40 aus, welche im Ventilkörper 21 ausgebildet ist und die Verbindungsöffnung 29 koaxial zur Mittel-Längs-Achse 7 umgibt. Diese Umfangsnut 40 ist in den Fig. 1 und 2 verschlossen durch ein Automatik-Ventil 41 in Form einer Ringscheibe. Der als Ventilelement dienende Scheibenkörper 41 a des Automatik-Ventils 41 ist als dreischichtiger Verbundkörper ausgeführt. Eine aus Metallblech ausgeführte Mittellage 42 ist hierbei beiderseits mit einer Kunststoffbeschichtung 43 versehen.

Fig. 3 zeigt das Automatik-Ventil 41 in geöffnetem Zustand, während das Blockier-Ventil 20 weiterhin geschlossen ist. In diesem Fall ist eine Automatik-Überströmverbindung 44 zwischen den Teil-Gehäuseräumen 15, 16 über den Überströmkanal 38 und die Umfangsnut 40 geschaffen.

In der in den Fig. 1 und 2 dargestellten Position ist der Scheibenkörper 41a des Automatik-Ventils 41 axial in der Schließstellung, in der er die Umfangsnut 40 und damit die Automatik-Überströmverbindung 44 verschließt, nach Art einer Tellerfeder vorgespannt. Dies wird dadurch erreicht, dass eine Aufnahmenut 45 für den inneren Umfangsbereich des Scheibenkörpers 41a, welche koaxial zur Mittel-Längs-Achse 7 um die Verbindungsöffnung 29 im Ventilkörper 21 ausgeführt ist, in Richtung der Mittel-Längs-Achse 7 axial gegenüber der Auflagefläche des freien äußeren Umfangsbereichs des Scheibenkörpers 41a des Automatik-Ventils auf dem Ventilkörper 21 derart verlagert ist, dass der Scheibenkörper 41a des Automatik-Ventils 41 in der Schließstellung leicht durchgebogen ist. Zur Einstellung dieser Vorspannung kann z.B. die Dicke der Mittellage 42 variiert werden.

Wird die Kolbenstange 8 in Schließstellung des Blockier-Ventils 20 entlastet, resultiert aufgrund der Blockierung des Kolbens 12 und der Vorspannung der Druckfeder über die Druckgas-Kammer 19 eine resultierende Kolben-Ausschubkraft auf den Kolben 12, die sich zusammensetzt aus einer durch den Druck im zweiten Teil-Gehäuseraum 16 resultierenden Kraft in Ausschubrichtung des Kolbens 12 und einer durch den Druck im ersten Teil-Gehäuseraum 15 resultierenden Gegenkraft entgegen der Ausschubrichtung des Kolbens 12. Das Verhältnis dieser beiden, die Resultierende ergebenden Kräfte entspricht dem Flächenverhältnis der Teil-Gehäuseräume 15, 16 im Bereich des Kolbens 12. Da diese Fläche im Bereich des Kolbens 12 auf der dem ersten Teil-Gehäuseraum 15 zugewandten Seite kleiner ist als auf der dem zweiten Teil-Gehäuseraum 16 zugewandten Seite, liegt aufgrund der von der Druckgas-Kammer 19 erzeugten Vorspannkraft im ersten Teil-Gehäuseraum 15 ein höherer Druck vor als im zweiten Teil-Gehäuseraum 16. Dies führt dazu, dass sich in der Automatik-Überströmverbindung 44 ein Druck entgegen der Vorspannkraft des Scheibenkörpers 41 a des Automatik-Ventils 41 in die Schließstellung aufbaut. Je nach der Größe der Vorspannkraft des Scheibenkörpers 41 a des Automatik-Ventils 41 öffnet dieses ab einem bestimmten Überdruck im Überströmkanal 38 verglichen mit dem Druck im zweiten Teil-Gehäuseraum 15. Dieser Überdruck wird erzeugt durch eine auf die Kolbenstange 8 wirkende Überwindungs-Kraft zur Überwindung der Blockierung der Druckfeder trotz geschlossenem Blockier-Ventil 20.

Je nach dem Grad der entsprechenden Vorspannung des Automatik-Ventils 41 in der Schließstellung ergeben sich folgende Funktionsvarianten des Automatik-Ventils 41 bei blockierter Druckfeder, also geschlossenem Blockier-Ventil 20:

In einer ersten Funktionsvariante der Druckfeder ist dieser Überdruck, bei dem das Automatik-Ventil 41 öffnet, dann erreicht, wenn die Kolbenstange 8 vollständig entlastet ist. Dies kann z. B. bei der Anwendung der Druckfeder innerhalb einer Rückenlehnenverstellung eines Sitzes der Fall sein, wenn bei blockierter Rükkenlehnenstellung, also bei blockiertem Blockier-Ventil 20, die Rückenlehne durch Aufrichten des Benutzers entlastet wird. In diesem Fall öffnet das Automatik-Ventil 41, während das Blockier-Ventil 20 geschlossen bleibt, und Hydrauliköl fließt vom ersten Teil-Gehäuseraum 15 in den zweiten Teil-Gehäuseraum 16, wodurch der Kolben 12 und mit diesem die Kolbenstange 8 langsam ausgeschoben wird. Die Vorspannung des Scheibenkörpers 41 a des Automatik-Ventils 41 kann dabei so gewählt sein, dass dieses schon dann öffnet, wenn die Kolbenstange 8 nicht vollständig entlastet ist, d. h. wenn auf diese noch eine Druckkraft entgegen der Kolbenstangen-Ausschubrichtung von außen zugeführt ist. Dies ist z. B. dann von Vorteil, wenn ein automatisches Ausschieben der Kolbenstange auch dann erfolgen soll, wenn diese noch teilweise in Kolbenstangen-Einschubrichtung belastet ist. Dies kann bei einer Sitzlehnenverstellung z. B. durch das Restgewicht der Sitzlehne gegeben sein, das auch bei entlasteter Sitzlehne auf die Kolbenstange in Kolbenstangen-Einschubrichtung übertragen ist.

In einer zweiten Funktionsvariante führt eine Entlastung der Kolbenstange 8 und damit des Kolbens 12 noch nicht zum Öffnen des Automatik-Ventils 41. Erst wenn eine bestimmte zusätzliche Verstellkraft in Ausschubrichtung der Kolbenstange 8 auf die Druckfeder ausgeübt wird, führt diese zusätzliche Verstellkraft zum Erreichen der Überwindungs-Kraft und damit zu einer ausreichenden Druckdifferenz zwischen den Teil-Gehäuseräumen 15, 16, welche zu einem Öffnen des Automatik-Ventils 41 führt. Die Druckfeder kann bei dieser Funktionsvariante im blockierten Zustand trotzdem durch Ausüben einer relativ geringen Verstellkraft in Ausschubrichtung verstellt werden. Dies kann z. B. bei einer Tischhöhenverstellung ausgenutzt werden.

Bei einer dritten Funktionsvariante öffnet das Automatik-Ventil 41 erst, wenn eine relativ große Überwindungs-Kraft in Ausschubrichtung ausgeübt wird, welche z. B. der doppelten Ausschubkraft der Druckfeder bei geöffnetem Blockier-Ventil 20 entspricht. Dies wird durch eine entsprechend vergrößerte Vorspannung des Scheibenkörpers 41a des Automatik-Ventils 41 erreicht. Diese Funktionsvariante kann z. B. bei der Sitzlehnenverstellung bei hintereinander angeordneten Sitzreihen eingesetzt werden, wodurch es einem Benutzer, der in einer Sitzreihe hinter einer zurückverstellten Sitzlehne sitzt, möglich wird, diese Sitzlehne auch bei blockiertem Blockier-Ventil 20 durch Ausüben einer entsprechend großen Verstellkraft in Ausschubrichtung in eine weniger geneigte Sitzlehnenposition zu verstellen.

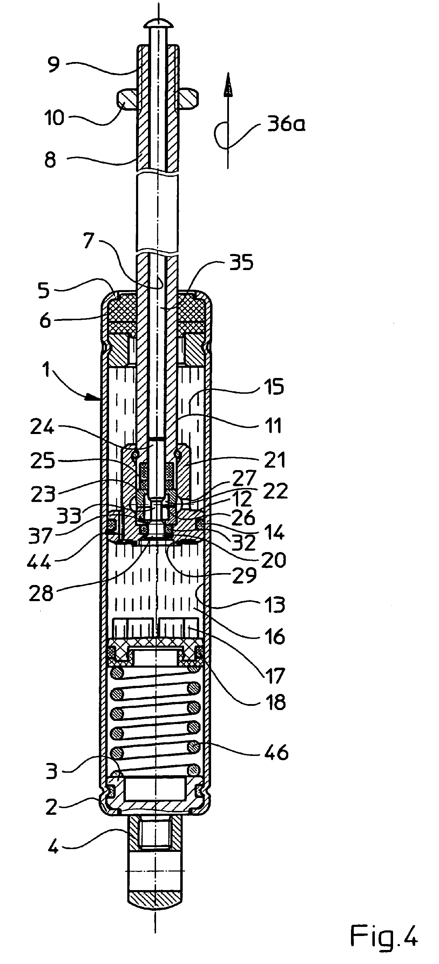

Weitere Ausführungsformen von Druckfedern sind in den Fig. 4 bis 7 dargestellt. Komponenten, die denjenigen entsprechen, die schon unter Bezugnahme auf die Fig. 1 bis 3 beschrieben wurden, tragen die gleichen Bezugszeichen und werden nicht nochmals im Einzelnen erläutert.

Fig. 4 zeigt eine zweite Ausführungsform einer Druckfeder. Diese unterscheidet sich von der ersten Ausführungsform nur dadurch, dass anstelle von Druckgas in der Kammer 19 als Kraftspeicher eine Schraubenfeder 46 als Federelement angeordnet ist. Ansonsten entspricht die Druckfeder nach Fig. 4 der ersten Ausführungsform.

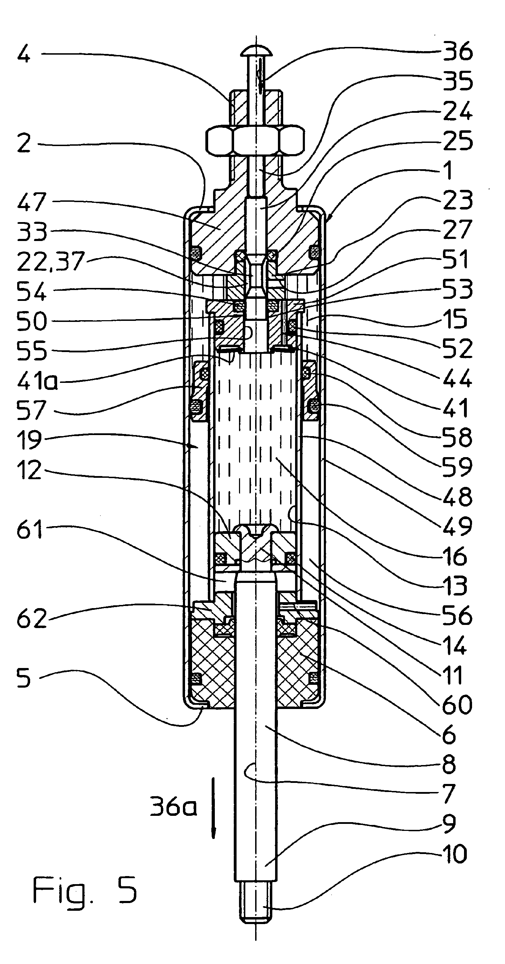

Fig. 5 zeigt eine dritte Ausführungsform der Druckfeder. Dort sind die Kolbenstange 8 und die Ventil-Betätigungsstange 35 an gegenüberliegenden Seiten aus dem Gehäuse 1 herausgeführt. Neben der Führungs- und Dichtungs-Einheit 6 für die Kolbenstange 8 am Ende 5 der Druckfeder ist bei der dritten Ausführungsform am gegenüberliegenden Ende 2 des Gehäuses 1 eine zweite Führungs- und Dichtungs-Einheit 47 flüssigkeitsdicht befestigt, die zur Führung und Abdichtung der im Gehäuse 1 koaxial zu dessen Mittel-Längs-Achse 7 verschiebbar angeordneten Ventil-Betätigungsstange 35 dient. Der erste Teil-Gehäuseraum 15 ist bei dieser Ausführungsform zu der Führungs- und Dichtungseinheit 47 axial benachbart als Ringraum ausgebildet, der nach innen begrenzt ist durch die Büchse 23 sowie den Ventilkörper 51 des Blockier-Ventils 50 und zudem durch die Außenwand des inneren Gehäusezylinders 48.

Der Kolben 12 der Kolbenstange 8 ist in einem inneren Gehäusezylinder 48 geführt, welcher den zweiten Teil-Gehäuseraum 16 beinhaltet und koaxial zu einem das Gehäuse 1 außen begrenzenden, äußeren Gehäusezylinder 49 angeordnet ist. Der Kolben 12 ist bei dieser Ausführungsform nicht zwischen den beiden Teil-Gehäuseräumen 15, 16 angeordnet. Eine Trennung zwischen diesen beiden Teil-Gehäuseräumen 15, 16 ist bei der dritten Ausführungsform durch ein Blockier-Ventil 50 mit einem Ventilkörper 51 gegeben, welcher den inneren Gehäusezylinder 48 an der der Führungs- und Dichtungseinheit 47 zugewandten Seite verschließt. Zwischen dem Ventilkörper 51 und der Innenwand des inneren Gehäusezylinders 48 dichtet eine Dichtung 52.

Der Ventilstift 24 dieser Ausführungsform weist an seinem zum Teil-Gehäuseraum 16 weisenden Ende einen Stiftabschnitt mit zylindrischer Dichtfläche 53 auf. Diese liegt in der Schließstellung des Blockier-Ventils 50 über eine Dichtung 54 an einer Gegenfläche 55 des Ventilkörpers 51 an. Die Betätigungs-Überströmverbindung 37 ist beim Blockier-Ventil 50 gebildet durch den Überströmkanal 27, den Ausschub-Überströmraum 22 sowie - in der geöffneten Position des Blockier-Ventils 50 - durch einen schmalen Ringraum zwischen der Dichtfläche 53 und der Gegenfläche 55. Durch die Betätigungs-Überströmverbindung 37 gelangt beim Einschieben des Kolbens 12 in den zweiten Teil-Gehäuseraum 16 in Richtung auf den Ventilkörper 51 zu Hydrauliköl vom zweiten Teil-Gehäuseraum 16 in den ersten Teil-Gehäuseraum 15. Dieses Einschieben erfolgt gegen die von Druckgas in einer Druckgaskammer 56 erzeugten Gegenkraft.

Die Druckgas-Kammer 56 ist zum Teil als Ringraum zwischen dem inneren Gehäusezylinder 48 und dem äußeren Gehäusezylinder 49 ausgebildet.

Zwischen dem ersten Teil-Gehäuseraum 15 und der Druckgas-Kammer 56 ist ein Schiebe-Kolbenring 57 angeordnet, der bei dieser Ausführungsform die Funktion des Schiebekolbens 17 der ersten Ausführungsform hat. Der Schiebe-Kolbenring 57 ist mit einer Dichtung 58 gegen die Außenwand des inneren Gehäusezylinders 48 und über eine Dichtung 59 gegen die Innenwand des äußeren Gehäusezylinders 49 abgedichtet. Diese ringförmige Teilkammer der Druckgas-Kammer 56 steht über einen Druckgas-Überströmkanal 60 mit einer zweiten Teilkammer 61 der Druckgas-Kammer 19 in Verbindung. Diese ist ebenfalls ringförmig und umgibt die Kolbenstange 8 hinter dem Kolben 12. Der Druckgas-Überströmkanal 60 ist in einem Zwischenkörper 62 ausgebildet, der zwischen der Führungs- und Dichtungseinheit 6 und dem diesem zugewandten Endabschnitt des inneren Gehäusezylinders 48 ausgebildet ist.

Beim Einschieben des Kolbens 12 in Richtung auf den Ventilkörper 51 zu vergrößert sich die Teilkammer 61 und Druckgas strömt von der Teilkammer 56 in die Teilkammer 61. Aufgrund des Flächenverhältnisses der druckbelasteten Kolbenflächen des Kolbens 12 ist die vom Druckgas auf eine Ringfläche des Kolbens 12 um die Kolbenstange 8 in Einschiebrichtung der Kolbenstange 8 wirkende Kraft geringer als die vom Druckgas über die Teil-Gehäuseräume 15 und 16 auf den vollen Querschnitt des Kolbens 12 in Ausschubrichtung auf die Kolbenstange 8 wirkende Kraft. Es resultiert netto eine Ausschubkraft von der Druckgas-Kammer 19 auf den Kolben 12 bei geöffnetem Blockier-Ventil 50. Beim Einschieben des Kolbens 12 wird der Schiebe-Kolbenring 57 in Richtung auf den Zwischenkörper 62 hin verschoben.

Wenn dagegen bei geöffnetem Blockier-Ventil 50 die Kolbenstange 8 entlastet ist, wird sie aufgrund der vom Druckgas auf den Kolben 12 ausgeübten Netto-Ausschubkraft aus dem Gehäuse 1 ausgeschoben, wobei der Schiebe-Kolbenring 57 in Richtung auf die Führungs- und Dichtungseinheit 47 zubewegt wird. Die Druckfeder des dritten Ausführungsbeispiels ist also ebenfalls eine Druck-Gasfeder. Wenn die Betätigungs-Stange 35 losgelassen wird, wird der Ventilstift 24 wieder aufgrund des im Teil-Gehäuseraum 16 wirkenden Drucks in seine Schließstellung gedrückt. Der Kolben 12 mit der Kolbenstange 8 ist dann relativ zu Gehäuse 1 mit diesem hydraulisch verriegelt bzw. blockiert.

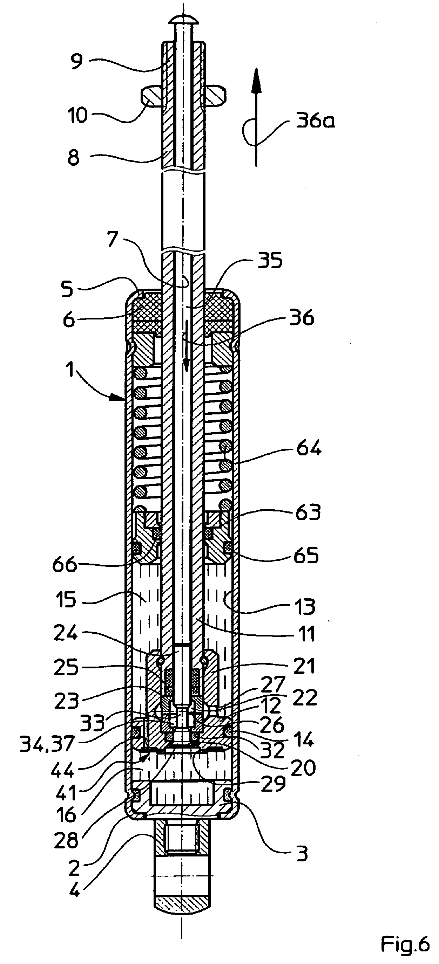

Fig. 6 zeigt ein viertes Ausführungsbeispiel einer Druckfeder. Diese unterscheidet sich vom zweiten Ausführungsbeispiel dadurch, dass anstelle eines Schiebekolbens, welcher den zweiten Teil-Gehäuseraum gegen eine Druckgas-Kammer abgrenzt, bei dieser vierten Ausführungsform ein Schiebe-Kolbenring 63 vorgesehen ist. Letzterer ist zwischen der Kolbenstange 8 und dem Gehäuse 1 angeordnet und trennt den ersten Teil-Gehäuseraum 15 von einer Schraubenfeder 64 mittels Dichtungen 65, 66 fluiddicht ab, welche der Führungs- und Dichtungseinheit 6 benachbart koaxial zur Mittel-Längs-Achse 7 um die Kolbenstange 8 herum angeordnet ist. Die Schraubenfeder 64 dient als Kraftspeicher der Druckfeder der vierten Ausführungsform.

Bei geöffnetem Blockier-Ventil 20 erfolgt beim Einschieben des Kolbens 12 in Richtung auf den Boden 3 des Gehäuses 1 zu ein Überströmen des Hydrauliköls durch die Betätigungs-Überströmverbindung 37 aus dem zweiten Teil-Gehäuseraum 16 in den ersten Teil-Gehäuseraum 15 entgegen der Druckkraft der Schraubenfeder 64, wobei der Schiebe-Kolbenring 63 weiter in Richtung auf die Führungs- und Dichtungseinheit 6 zu verschoben wird. Wenn dagegen bei geöffnetem Blockier-Ventil 20 die Kolbenstange 8 entlastet ist, wird sie aufgrund der von der Schraubenfeder 64 ausgeübten Kraft auf das Hydrauliköl über den ersten Teil-Gehäuseraum 15, die Betätigungs-Überströmverbindung 37 sowie den zweiten Teil-Gehäuseraum 16 aus dem Gehäuse 1 ausgeschoben, wobei der Schiebe-Kolbenring 63 in Richtung auf den Boden 3 zu bewegt wird.

In der verriegelten Stellung lässt sich die Kolbenstange 8 aufgrund der Wirkung des Automatik-Ventils 41 entsprechend den im Zusammenhang mit den Fig. 1 bis 3 beschriebenen Funktionsvarianten dann in Ausschubrichtung verstellen, wenn die vorgegebene Vorspannung des Scheibenkörpers 41a des Automatik-Ventils 41 überwunden wird.

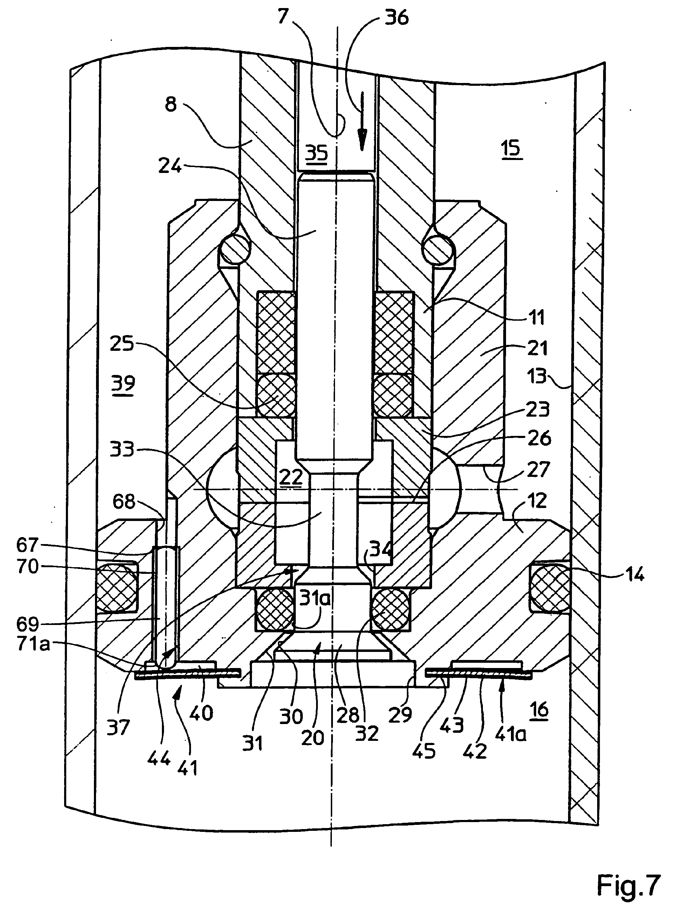

Eine weitere Ausführung der Druckfeder ist in Fig. 7 dargestellt. Diese unterscheidet sich von der Ausführungsform nach den Fig. 1 und 3 nur durch die Ausgestaltung des Überströmkanals. Anstelle des Überströmkanals 38 der Ausführung nach den Fig. 1 bis 3 weist diejenige nach Fig. 7 einen sich zum Scheibenkörper 41 a hin über eine Stufe 67 stufenförmig erweiternden Überströmkanal 68. In dem stufenförmig erweiterten Abschnitt des Überströmkanals 68 ist ein Zylinderstift 69 gehalten, dessen Außendurchmesser nur geringfügig kleiner ist als der Innendurchmesser des erweiterten Abschnitts des Überströmkanals 68. Zwischen der Außenwand des Zylinderstifts 69 und der Innenwand des Überströmkanals 68 in dem erweiterten Abschnitt ist somit ein Ringkanal 70 gebildet, der mit dem Überströmkanal 68 im nicht erweiterten Abschnitt in Strömungsverbindung steht. Ein dem Scheibenkörper 41 a zugewandtes Ende 71 a des Zylinderstifts 69 ist ballig ausgeführt und liegt in der nicht abgehobenen Stellung des Scheibenkörpers 41a nach Fig. 7 an diesem an. Über die Durchmesserverhältnisse des erweiterten Abschnitts des Überströmkanals 68 einerseits und des Zylinderstifts 69 andererseits sowie über die Länge des Zylinderstifts 69 lässt sich eine Feinabstimmung der Dämpfung der Druckfeder nach Fig. 7 erreichen. Die Funktion der Automatik-Überströmverbindung 44 und der Druckfeder nach Fig. 7 entspricht derjenigen, die oben im Zusammenhang mit der Druckfeder nach den Fig. 1 bis 3 schon erläutert wurde.

**Patentansprüche**

1.  Längenverstellbare Druckfeder, die

    - ein mit einem fliessfähigen Druck-Medium gefülltes Gehäuse (1) mit einer Mittel-Längs-Achse (7),
    - eine das Gehäuse (1) an einem ersten Ende (5) abschließende Führungs- und Dichtungseinheit (6),
    - eine abgedichtet durch die Führungs- und Dichtungseinheit (6) aus dem ersten Ende (5) des Gehäuses (1) herausgeführte, ein äußeres Ende (9) aufweisende Kolbenstange (8),
    - einen mit der Kolbenstange (8) verbundenen, im Gehäuse (1) abgedichtet geführten Kolben (12),
    - einen einseitig vom Kolben (12) begrenzten und mit Druck-Medium gefüllten ersten Teil-Gehäuseraum (15),
    - einen Kraftspeicher (19; 46; 64) zum Aufbringen eines Drucks auf das Druck-Medium,
    - einen weiteren, mit dem ersten Teil-Gehäuseraum (15) verbindbaren, mit Druck-Medium gefüllten zweiten Teil-Gehäuseraum (16), und
    - ein betätigbares Ventil (20; 50) zum Miteinander-Verbinden der Teil-Gehäuseräume (15, 16) durch eine Betätigungs-Überströmverbindung (37) aufweist, welches einen Ventilstift (24) aufweist, der von außerhalb des Gehäuses (1) in eine Öffnungsstellung des betätigbaren Ventils (20; 50) bringbar ist und der in eine Schließstellung bringbar ist,
    - ein automatisches Ventil (41) zum Miteinander-Verbinden der Teil-Gehäuseräume (15, 16) **durch** eine Automatik-Überströmverbindung *(44) aufweist,* **gekennzeichnet durch** ein derart in eine Schließstellung vorgespanntes Ventilelement (41a), dass in der Schließstellung des Ventilstifts (24) des betätigbaren Ventils (20; 50) ein Öffnen des automatischen Ventils (41) in eine Offenstellung erst dann erfolgt, wenn zwischen der Kolbenstange (8) und dem Gehäuse (1) eine Überwindungs-Kraft $F_1$ in einer Kolbenstangen-Ausschubrichtung (36a) wirkt, die sich zu einer Ausschub-Kraft $F_2$, welche **durch** den Druck des Druck-Mediums zwischen der Kolbenstange (8) und dem Gehäuse (1) in den Teil-Gehäuseräumen (15, 16) in Kolbenstangen-Ausschubrichtung (36a) in der Offenstellung des Ventilstifts (24) des betätigbaren Ventils (20; 50) wirkt, folgendermaßen verhält:

$$- 2\,F_2 < F_1 < 2\,F_2.$$

2.  Druckfeder nach Anspruch 1, **dadurch gekennzeichnet, dass** das automatische Ventil (41) derart ausgeführt ist, dass das Kräfteverhältnis zwischen den Kräften $F_1$ und $F_2$ folgendermaßen ist:

    $0 < F_1 < F_2$, insbesondere $0 < F_1 < 0,5\,F_2$, bevorzugt $0 < F_1 < 0,1\,F_2$ oder $F_1 = 0$.

3.  Druckfeder nach Anspruch 1, **dadurch gekennzeichnet, dass** das automatische Ventil (41) derart ausgeführt ist, dass das Kräfteverhältnis zwischen den Kräften $F_1$ und $F_2$ folgendermaßen ist:

    $- F_2 < F_1 < 0$, insbesondere $- 0,5\,F_2 < F_1 < 0$, bevorzugt $- 0,1\,F_2 < F_1 < 0$.

4.  Druckfeder nach einem der Ansprüche 1 bis 3, **dadurch gekennzeichnet, dass** das Ventilelement (41a) des automatischen Ventils (41) als Verbundkörper mit einer Trägerlage (42) ausgebildet ist, die zumindest einseitig mit einer nicht-metallischen Lage (43) beschichtet ist.

5.  Druckfeder nach Anspruch 4, **dadurch gekennzeichnet, dass** die Trägerlage (42) des Ventilelements (41a) metallisch ist.

6.  Druckfeder nach Anspruch 4 oder 5, **dadurch gekennzeichnet, dass** die nicht-metallische Lage (43) des Ventilelements (41a) aus Kunststoff oder Gummi ist.

**7.** Druckfeder nach einem der Ansprüche 1 bis 6, **dadurch gekennzeichnet, dass** das Ventilelement (41a) des automatischen Ventils (41) als Ringscheibe ausgebildet ist, welche *nach Art einer Tellerfeder* in Schließstellung vorgespannt ist.

**8.** Druckfeder nach einem der Ansprüche 1 bis 7, **dadurch gekennzeichnet, dass** der Kraftspeicher durch eine Druckgas-Kammer (19) gebildet ist.

**9.** Druckfeder nach einem der Ansprüche 1 bis 7, **dadurch gekennzeichnet, dass** der Kraftspeicher durch eine Schraubenfeder (46; 64) gebildet ist.

**10.** Druckfeder nach einem der Ansprüche 1 bis 9, **gekennzeichnet durch** Öl als Druck-Medium.

**11.** Druckfeder nach einem der Ansprüche 1 bis 10, **gekennzeichnet durch** eine Automatik-Überströmverbindung (44) mit einem Überströmkanal (38), in dem zumindest abschnittsweise ein Zylinderstift (69) eingesetzt ist, so dass zwischen der Außenwand des Zylinderstifts (69) und der dieser benachbarten Innenwand des Überströmkanals (38) eine Überströmverbindung in Form eines Ringkanals (70) gegeben ist.

**Claims**

**1.** An adjustable-length compression spring, comprising

- a casing (1), which is filled with a free-flowing pressure fluid and has a central longitudinal axis (7);
- a guide and seal unit (6), which closes a first end (5) of the casing (1);
- a piston rod (8), which has an outer end (9) and is sealingly extended through the guide and seal unit (6) out of the first end (5) of the casing (1);
- a piston (12), which is connected to the piston rod (8) and sealingly guided in the casing (1);
- a pressure-fluid-filled first sectional casing chamber (15), which is unilaterally defined by the piston (12);
- an energy accumulator (19; 46; 64) for exercising pressure on the pressure fluid;
- a pressure-fluid-filled second sectional casing chamber (16), which is connectable to the first sectional casing chamber (15); and
- a controllable valve (20; 50) for interconnection of the sectional casing chambers (15, 16) by an actuation/overflow assembly (37), the valve (20; 50) having a valve pin (24), which is movable from outside the casing (1) into an open position of the controllable valve (20; 50) and into a shut-off position;
- an automatic valve (41) for interconnection of the sectional casing chambers (15, 16) by an automatic overflow connection (44), **characterized by** a valve element (41a), which is pre-loaded in a shut-off position such that opening the automatic valve (41) into an open position in the valve-pin (24) shut-off position of the controllable valve (20; 50) takes place only when an overcoming force $F_1$ works between the piston rod (8) and the casing (1) in a piston-rod push-out direction (36a), with

$$-2F_2 < F_1 < 2F_2$$

applying to a relationship between the overcoming force $F_1$ and a push-out force $F_2$ which, by the pressure of the pressure fluid, works between the piston rod (8) and the casing (1) in the sectional casing chambers (15, 16) in a piston-rod push-out direction (36a) in the open position of the valve pin (24) of the controllable valve (20; 50).

**2.** A compression spring according to claim 1, **characterized in that** the automatic valve (41) is designed such that the force $F_1$ to $F_2$ relationship is as follows: $0 < F_1 < F_2$, in particular $0 < F_1 < 0.5 F_2$, preferably $0 < F_1 < 0.1 F_2$ or $F_1 = 0$.

**3.** A compression spring according to claim 1, **characterized in that** the automatic valve (41) is designed such that the force $F_1$ to $F_2$ relationship is as follows: $-F_2 < F_1 < 0$, in particular $-0.5 F_2 < F_1 < 0$, preferably $-0.1 F_2 < F_1 < 0$.

**4.** A compression spring according to claim 1 to 3, **characterized in that** the valve element (41a) of the automatic valve (41) is a composite body with a substrate layer (42) that is at least unilaterally coated with a non-metal layer (43).

**5.** A compression spring according to claim 4, **characterized in that** the substrate layer (42) of the valve element (41a) is made of metal.

**6.** A compression spring according to claim 4 or 5, **characterized in that** the non-metal layer (43) of the valve element (41a) is made of plastic material or rubber.

**7.** A compression spring according to one of claims 1 to 6, **characterized in that** the valve element (41a) of the automatic valve (41) is an annular disk which is pre-loaded in the shut-off position according to a disc spring.

**8.** A compression spring according to one of claims 1 to 7, **characterized in that** the energy accumulator is a compressed-gas chamber (19).

**9.** A compression spring according to one of claims 1 to 7, **characterized in that** the energy accumulator is a helical spring (46; 64).

**10.** A compression spring according to one of claims 1 to 9, **characterized by** oil as a pressure fluid.

**11.** A compression spring according to one of claims 1 to 10, **characterized by** an automatic overflow connection (44) which comprises an overflow channel (38) with a cylindrical pin (69) at least by sections inserted therein so that an overflow connection in the form of an annular channel (70) is provided between the outside wall of the cylindrical pin (69) and the inside wall, contiguous thereto, of the overflow channel (38).

**Revendications**

**1.** Ressort de compression réglable en longueur, comportant :

- un corps (1) avec un axe longitudinal médian (7), rempli d'un milieu sous pression à écoulement libre,
- une unité de guidage et d'étanchéité (6) fermant le corps (1) au niveau d'une première extrémité (5),
- une tige de piston (8) comportant une extrémité extérieure (9), qui sort de façon étanche de la première extrémité (5) du corps (1) à travers l'unité de guidage et d'étanchéité (6),
- un piston (12) relié à la tige de piston (8), qui est guidé de façon étanche dans le corps (1),
- un premier espace partiel (15) de corps délimité d'un côté par le piston (12), et rempli d'un milieu sous pression,
- un accumulateur de force (19 ; 46 ; 64) pour l'application d'une pression sur le milieu sous pression,
- un autre deuxième espace partiel (16) de corps rempli de milieu sous pression, pouvant être relié au premier espace partiel (15) de corps, et
- une vanne actionnable (20 ; 50) pour relier entre eux les espaces partiels (15, 16) de corps par une liaison d'écoulement d'actionnement (37), laquelle est dotée d'une broche de vanne (24) pouvant être amenée à partir de l'extérieur du corps (1) dans une position d'ouverture de la vanne actionnable (20 ; 50), et qui peut être amenée dans une position de fermeture,
- une vanne automatique (41) pour relier entre eux les espaces partiels (15, 16) de corps par une liaison d'écoulement automatique (44), **caractérisé par** un élément de vanne (41a) précontraint dans une position de fermeture de telle sorte que, dans la position de fermeture de la broche de vanne (24) de la vanne actionnable (20 ; 50), une ouverture de la vanne automatique (41) dans une position d'ouverture n'ait lieu que lorsqu'une force de déblocage $F_1$ agit entre la tige de piston (8) et le corps (1) dans un sens de sortie (36a) de la tige de piston, qui, par rapport à une force de sortie $F_2$, qui dans la position d'ouverture de la broche de vanne (24) de la vanne actionnable (20 ; 50), agit entre la tige de piston (8) et le corps (1) dans le sens de sortie (36a) sous l'effet de la pression du milieu sous pression dans les espaces partiels (15, 16) de corps, se comporte comme suit :

$$- 2 \; F_2 \; < \; F_1 \; < \; 2 \; F_2.$$

**2.** Ressort de compression selon la revendication 1, **caractérisé en ce que** la vanne automatique (41) est réalisée de telle sorte que le rapport de forces entre les forces $F_1$ et $F_2$ soit le suivant :

$0 < F_1 < F_2$, notamment $0 < F_1 < 0,5 \; F_2$, de préférence $0 < F_1 < 0,1 \; F_2$ ou $F_1 = 0$.

**3.** Ressort de compression selon la revendication 1, **caractérisé en ce que** la vanne automatique (41) est réalisée de telle sorte que le rapport de forces entre les forces $F_1$ et $F_2$ soit le suivant :

- $F_2 < F_1 < 0$, notamment - $0,5 \; F_2 < F_1 < 0$, de préférence - $0,1 \; F_2 < F_1 < 0$.

**4.** Ressort de compression selon l'une quelconque des revendications 1 à 3, **caractérisé en ce que** l'élément de vanne (41a) de la vanne automatique (41) est réalisé sous la forme d'un corps composite avec une couche de support (42), qui est revêtue d'une couche non métallique (43), au moins sur une face.

**5.** Ressort de compression selon la revendication 4, **caractérisé en ce que** la couche de support (42) de l'élément de vanne (41a) est métallique.

**6.** Ressort de compression selon la revendication 4 ou 5, **caractérisé en ce que** la couche non métallique (43) de l'élément de vanne (41a) est en matière plastique ou en caoutchouc.

**7.** Ressort de compression selon l'une quelconque des revendications 1 à 6, **caractérisé en ce que** l'élément de vanne (41a) de la vanne automatique (41) est réalisé sous la forme d'un disque annulaire, qui est précontraint dans la position de fermeture à la manière d'un ressort à disques.

8. Ressort de compression selon l'une quelconque des revendications 1 à 7, **caractérisé en ce que** l'accumulateur de force est formé par une chambre de gaz comprimé (19).

9. Ressort de compression selon l'une quelconque des revendications 1 à 7, **caractérisé en ce que** l'accumulateur de force est formé par un ressort hélicoïdal (46 ; 64).

10. Ressort de compression selon l'une quelconque des revendications 1 à 9, **caractérisé par** de l'huile en tant que milieu sous pression.

11. Ressort de compression selon l'une quelconque des revendications 1 à 10, **caractérisé par** une liaison d'écoulement automatique (44) avec un canal d'écoulement (38), dans lequel est insérée une broche cylindrique (69), au moins par tronçons, de sorte qu'une liaison d'écoulement sous forme d'un canal annulaire (70) soit engendrée entre la paroi extérieure de la broche cylindrique (69) et la paroi intérieure adjacente à celle-ci du canal d'écoulement (38).

Fig.1

Fig.2

EP 1 403 549 B1

Fig.3

13

Fig.4

Fig. 5

Fig.6

Fig.7